# EUROPÄISCHE PATENTANMELDUNG

(11) **EP 2 071 712 A2**
(43) Veröffentlichungstag der Anmeldung: **17.06.2009**
(21) Anmeldenummer: 08105586.5
(22) Anmeldetag: 16.10.2008
(51) Int. Cl.: H02K 11/00

(54) **Elektrische Maschine mit einer Sensoreinrichtung zur Rotorlageerkennung**

(30) Priorität: 14.12.2007 DE 102007060241
(71) Anmelder: ROBERT BOSCH GMBH, 70442 Stuttgart (DE)
(72) Erfinder: Feuerrohr, Lin, 77833, Ottersweier (DE)

(57) **Zusammenfassung**

Eine elektrische Maschine weist einen Stator und einen Rotor sowie eine Sensoreinrichtung zum Erfassen der Relativlage zwischen Stator und Rotor auf, wobei die Sensoreinrichtung mit einem Flussleitelement und einem magnetischen Sensorelement ausgestattet ist. Das Sensorelement ist mit Abstand zum Rotor angeordnet, wobei ein sich zwischen dem Sensorelement und dem Rotor befindender Luftspalt von dem Flussleitelement überbrückt wird.

## Beschreibung

Die Erfindung bezieht sich auf eine elektrische Maschine mit einer Sensoreinrichtung zur Rotorlageerkennung nach dem Oberbegriff des Anspruches 1.

### Stand der Technik

In der DE 10 2005 004 322 A1 wird eine elektrische Maschine beschrieben, bestehend aus einem Stator und einem drehbar gelagerten Rotor, die mit einer Sensoreinrichtung zur Erfassung der Relativposition des Rotors bezogen auf den Stator ausgestattet ist. Mithilfe der Sensoreinrichtung kann die aktuelle Winkellage des Rotors bestimmt werden. Hierfür ist ein Hallsensor vorgesehen, der in der Lage ist, Änderungen der magnetischen Flussdichte zu sensieren. Der Rotor ist mit einem Rotormagneten ausgerüstet, dessen Magnetfeld auf Grund der Rotation des Rotors sich bezogen auf den ortsfesten Hallsensor ändert, was von diesem detektiert werden kann. Auf diese Weise können die Rotorlage und die Rotordrehzahl bestimmt werden.

Zur Verbesserung der Lageerkennung ist ein Flussleitelement aus ferromagnetischem Material vorgesehen, welches die Aufgabe hat, den magnetischen Fluss des Rotormagneten zum Hallsensor zu leiten, der in unmittelbarer Nähe zum Flussleitelement angeordnet ist. Das ferromagnetische Flussleitelement wird hierbei von dem Magnetfeld des Rotormagneten selbst magnetisiert. Der Vorteil dieser Ausführung liegt in der Anhebung der magnetischen Flussdichte unmittelbar am Ort des Hallsensors, der daraufhin ein zuverlässiges Messsignal generiert. Störungen auf das Messsignal, wie sie beispielsweise durch einen Statorstreufluss entstehen, werden auf diese Weise reduziert.

### Offenbarung der Erfindung

Von diesem Stand der Technik ausgehend liegt der Erfindung die Aufgabe zugrunde, die Lageerkennung des Rotors in einer elektrischen Maschine zu verbessern. Das von einer Sensoreinrichtung in der elektrischen Maschine generierte Signal soll unter den üblichen Betriebsbedingungen mit hoher Zuverlässigkeit generiert werden.

Diese Aufgabe wird erfindungsgemäß mit den Merkmalen des Anspruches 1 gelöst. Die Unteransprüche geben zweckmäßige Weiterbildungen an.

Bei der erfindungsgemäßen elektrischen Maschine handelt es sich um einen Elektromotor oder auch um einen Generator, der einen Stator und einen relativ zum Stator drehbar gelagerten Rotor aufweist, wobei über eine Sensoreinrichtung die Relativlage zwischen Stator und Rotor erfasst wird. Im Falle eines Elektromotors kommt beispielsweise eine Anwendung als Kleinantrieb insbesondere für ein Hilfsaggregat in Kraftfahrzeugen in Betracht wie z.B. eine Wasserpumpe im Fahrzeug-Kühlkreislauf.

Die Sensoreinrichtung umfasst ein vorteilhafterweise ferromagnetisches, ggf. weichmagnetisches Flussleitelement und ein Sensorelement, wobei über das Flussleitelement der Magnetfluss eines mit dem Rotor umlaufenden Magneten zum Sensorelement geleitet wird. Das Flussleitelement weist Polabschnitte auf, die mit minimalem Abstand an einen mit dem Rotor umlaufenden Magneten angrenzen, wobei die Polabschnitte des Flussleitelements zu gegensinnigen Polen des Magneten am Rotor geführt sind, so dass über das Flussleitelement ein Rückschluss zur Führung des magnetischen Flusses zwischen diesen beiden gegensinnigen Polen gebildet wird. Die beiden Polabschnitte des Flussleitelementes sind über einen Steg miteinander verbunden, an dem sich das Sensorelement befindet.

Das Sensorelement ist mit Abstand zum Rotor bzw. Stator angeordnet, und zwar in der Weise, dass sich zwischen dem Sensorelement und dem Rotor oder ggf. dem Stator ein Luftspalt befindet, der von dem Flussleitelement überbrückt wird. Auf diese Weise ist es möglich, das Sensorelement auf Abstand zum Rotor und zum Stator zu positionieren, wobei über das Flussleitelement die magnetische Flussänderung, welche bei der Drehung des Rotors entsteht, zum Sensorelement geführt wird, in welchem trotz des Abstandes in zuverlässiger Weise ein Signal erzeugt wird. Der Abstand schützt das in der Regel temperaturempfindliche Sensorelement vor thermischen Einflüssen, die durch die Erwärmung der elektrischen Maschine im Stator und im Rotor verursacht werden.

Ein weiterer Vorteil liegt in der einfacheren Montage und der höheren Toleranzunempfindlichkeit des Sensorelementes bei der Montage. Zudem bestehen aufgrund des Abstandes zu Stator und Rotor größere konstruktive Freiheiten bei der Anordnung des Sensorelementes, da über eine entsprechende geometrische Konfiguration des Flussleitelementes sowohl ein axialer als auch ein radialer Abstand zum Rotor und zum Stator überbrückt werden kann.

Gemäß einer zweckmäßigen Weiterbildung weist der Steg zwischen den Polabschnitten des Flussleitelementes einen reduzierten Querschnitt auf, so dass im Bereich des Steges eine höhere Flussdichte gegeben ist, die von dem benachbart zum Steg angeordneten Sensorelement detektiert wird. Die Querschnittsreduzierung des Stegs zwischen den Polabschnitten des Flussleitelements hat eine Erhöhung der magnetischen Flussdichte im Steg und damit am Ort des Sensorelements zur Folge.

Das Flussleitelement ist gemäß einer weiteren vorteilhaften Ausführung zumindest annähernd U-förmig ausgebildet und weist die zwei zum Rotor führenden und zueinander zumindest im Wesentlichen parallelen Polabschnitte auf sowie den die Polabschnitte verbindenden Steg, an dem das Sensorelement positioniert wird. Grundsätzlich kommen verschiedene Anordnungen des Flussleitelementes bezogen auf den Rotor der elektrischen Maschine in Betracht. Möglich ist zum einen eine Anordnung in Querrichtung, bei der die Polabschnitte quer bzw. radial zur Rotorachse gerichtet sind und dementsprechend der verbindende Steg etwa tangential zum Rotor bzw. dem Stator angeordnet ist. Gemäß einer anderen zweckmäßigen Ausführung kommt auch eine axiale Anordnung des U-förmigen Flussleitelementes in Betracht, bei der die Polabschnitte in Achsrichtung bzw. parallel zur Rotorachse gerichtet sind und der verbindende Steg zumindest annähernd parallel zur Ebene durch die Stirnseite des Stators bzw. des Rotors verläuft. Des Weiteren kommen auch Mischformen in Betracht, also Ausführungen, bei denen die Polabschnitte sowohl eine Komponente in Querrichtung als auch in Achsrichtung aufweisen. Außerdem können auch verschiedenartige Geometrien im Flussleitelement verwirklicht werden, so z.B. gebogene Polabschnitte und/oder Stege, Flussleitelemente mit gekröpften Abschnitten oder Flussleitelemente, die in sonstiger Weise dreidimensional geformte Polabschnitte bzw. Stege aufweisen. Des Weiteren ist es möglich, das Flussleitelement als einteiliges, gebogenes Bauteil auszuführen oder aber, gemäß einer Alternative, aus mehreren, einzelnen Bauteilen zusammenzusetzen.

Das Sensorelement ist zweckmäßigerweise an einer Leiterplatte angeordnet, die beispielsweise parallel zum Steg des Flussleitelementes liegt. Das Sensorelement kann entweder unmittelbar auf der Leiterplatte angeordnet sein (Surface Mounted Device - SMD) oder über Verbindungsfüße bzw. -beine mit der Leiterplatte verbunden sein. Die letztgenannte Ausführung hat den Vorteil, dass über die Verbindungsfüße und die dadurch entstehende zusätzliche Distanz zur Leiterplatte weitergehende Anordnungsmöglichkeiten für das Sensorelement gegeben sind. Die unmittelbare Positionierung des Sensorelements auf der Leiterplatte zeichnet sich dagegen durch eine kompakte und kostengünstige Ausführung aus.

Möglich ist sowohl eine Anordnung der Leiterplatte zwischen der Stirnseite des Rotors und dem die Polabschnitte des Flussleitelements verbindenden Steg als auch eine Positionierung der Leiterplatte außerhalb des Stegs, also mit größerem Abstand zur Stirnseite des Rotors als der Steg aufweist. Im Falle eines Übergreifens des Sensorelementes und der Leiterplatte von dem Steg des Flussleitelementes wird eine in Achsrichtung verhältnismäßig kompakte Bauform erzielt.

Gemäß einer weiteren zweckmäßigen Bauform weist das Flussleitelement einen dritten, mit dem Steg verbundenen Polabschnitt auf, der ebenfalls zum Rotor geführt ist und dort am Gegenpol des rotorseitigen Magneten mündet.

Als Sensorelement werden vorzugsweise Hallsensoren eingesetzt. Es kommen aber auch andere Magnetsensoren in Betracht, beispielsweise AMR-Sensoren (Anisotroper magnetoresistiver Effekt) oder GMR-Sensoren (giant magnetoresistive effect).

Grundsätzlich ist es ausreichend, in der elektrischen Maschine einen Rotormagneten vorzusehen, der zum Antrieb der Maschine das erforderliche Magnetfeld erzeugt. Dieses Magnetfeld des Rotormagneten wird über das Flussleitelement zu dem Sensorelement geleitet. In einer alternativen Ausführung kann es aber auch zweckmäßig sein, einen zusätzlichen Gebermagneten vorzusehen, der ebenfalls fest mit dem Rotor verbunden ist und mit dem Rotor umläuft, jedoch als separater Magnet unabhängig vom Rotormagneten ausgebildet ist. Dieser Gebermagnet kann mit Abstand, insbesondere mit axialem Abstand zum Rotormagneten angeordnet sein, wodurch der Abstand zwischen dem temperaturempfindlichen Sensorelement und dem Rotor und dem Stator weiter vergrößert werden kann.

Der Rotor kann auf verschiedene Weise aufgebaut sein. In Betracht kommen beispielsweise Ausführungen mit Ringmagneten, Schalenmagneten, vergrabenen Magneten oder Ausführungen in Folgepol (consequent pole).

Die Magnetisierung des Rotors kann in radialer oder paralleler Ausführung oder als Hallbach-Magnetisierung erfolgen.

Die erfindungsgemäßen Flussleitelemente können grundsätzlich bei allen Motoren eingesetzt werden, die mit Hallsensoren oder sonstigen Magnetsensoren als Rotorlagesensoren ausgerüstet sind, beispielsweise Asynchronmaschinen, Synchronreluktanzmotoren sowie permanenterregte, elektronisch kommutierte Antriebe und Gleichstrommotoren mit Lagerückmeldung. Mittels des Flussleitelementes können auch Anordnungen realisiert werden, bei denen die Leiterplatte, auf der das Sensorelement angeordnet ist, aus thermischen oder aus Platzgründen verhältnismäßig weit vom Motor entfernt ist. Des Weiteren weist der Einsatz des Flussleitelementes Vorteile auf im Falle von relativ schwachen Rotorfeldern, wie sie beispielsweise bei kunststoffgebundenen Ferritmagneten sowie bei größeren Abständen zwischen Magnet und Sensor auftreten, und bei verhältnismäßig starken Störfeldern, beispielsweise Streufeldern, die durch Statorströme hervorgerufen werden. Es kommt eine Anwendung auch bei hohen Temperaturen in Betracht, beispielsweise bei einer Kombination einer mit heißem Medium durchfluteten Maschine mit integrierter temperaturempfindlicher Leistungselektronik, bei der die Leiterplatte mit einer Entfernung zum Motor positioniert wird, die die Länge der Verbindungsfüße des Verbindungselementes zur Leiterplatte übersteigt. Die Ausführung weist außerdem Kostenvorteile auf, da grundsätzlich einfach aufgebaute und günstig herzustellende Flussleitelemente eingesetzt werden können, die zudem mit hoher Genauigkeit im Stator eingebaut bzw. eingespritzt werden können.

Weitere Vorteile und zweckmäßige Ausführungen sind den weiteren Ansprüchen, der Figurenbeschreibung und den Zeichnungen zu entnehmen. Es zeigen:
- Fig. 1: eine elektrische Maschine mit Stator und Rotor in Seitenansicht und Draufsicht, mit einer Sensoreinrichtung zur Detektierung des mit dem Rotor umlaufenden Magnetfeldes, wobei die Sensoreinrichtung einen Hallsensor und ein Flussleitelement umfasst, das die magnetische Flussdichte des Rotorfelds am Ort des Hallsensors verstärkt, und wobei der Hallsensor dem Rotor axial vorgelagert ist,
- Fig. 2: eine elektrische Maschine mit einer Sensoreinrichtung in einer weiteren Ausführung, bei der Rotormagnet eine radiale Magnetisierung aufweist und das Uförmige Flussleitelement zu Gegenpolen des Rotormagneten an der radialen Innen- und Außenseite geführt ist,
- Fig. 3: eine elektrische Maschine mit einer Sensoreinrichtung in noch einer weiteren Ausführung, bei der der Hallsensor mit Querabstand zu Rotor und Stator angeordnet ist,
- Fig. 4: eine elektrische Maschine mit einer Sensoreinrichtung in noch einer weiteren Ausführung, bei der das Sensorelement dem Rotor axial vorgelagert ist und das Flussleitelement insgesamt drei Polabschnitte aufweist, die zu verschiedenen Polen des Rotormagneten geführt sind,
- Fig. 5: eine elektrische Maschine mit einer Sensoreinrichtung in noch einer weiteren Ausführung, bei der ein erster Polabschnitt des Flussleitelements zur radialen Außenseite des Rotormagneten und der zweite Polabschnitt axial zum Rotorkern geführt ist,
- Fig. 6: eine elektrische Maschine mit einer Sensoreinrichtung in noch einer weiteren Ausführung, bei der analog zu Fig. 1 das Sensorelement dem Rotor axial vorgelagert, jedoch unmittelbar auf der Leiterplatte montiert ist,
- Fig. 7: eine als Außenläufer ausgeführte elektrische Maschine mit einer Sensoreinrichtung zur Abtastung des Rotor-Magnetfeldes, wobei das Flussleitelement der Sensoreinrichtung sich zwischen gegenüberliegenden Innenseiten des den Stator ringförmig einschließenden Rotors erstreckt,
- Fig. 8: eine als Außenläufer ausgeführte elektrische Maschine mit radialer Magnetisierung des Rotors, wobei die Polabschnitte des Flussleitelementes zur radialen Innen- und Außenseite des Rotors geführt sind,
- Fig. 9: eine als Innenläufer ausgeführte elektrische Maschine mit radialer Magnetisierung des Rotors, wobei die Sensoreinrichtung insgesamt drei Sensorelemente umfasst, denen jeweils ein Flussleitelement zugeordnet ist,
- Fig. 10: eine elektrische Maschine mit separatem Gebermagnet für die Sensoreinrichtung, wobei das Flussleitelement dem Gebermagnet zugeordnet ist,
- Fig. 11: eine elektrische Maschine mit Klauenpolstator und axial dem Rotor vorgelagertem Sensorelement.

In den Figuren sind gleiche Bauteile mit gleichen Bezugszeichen versehen.

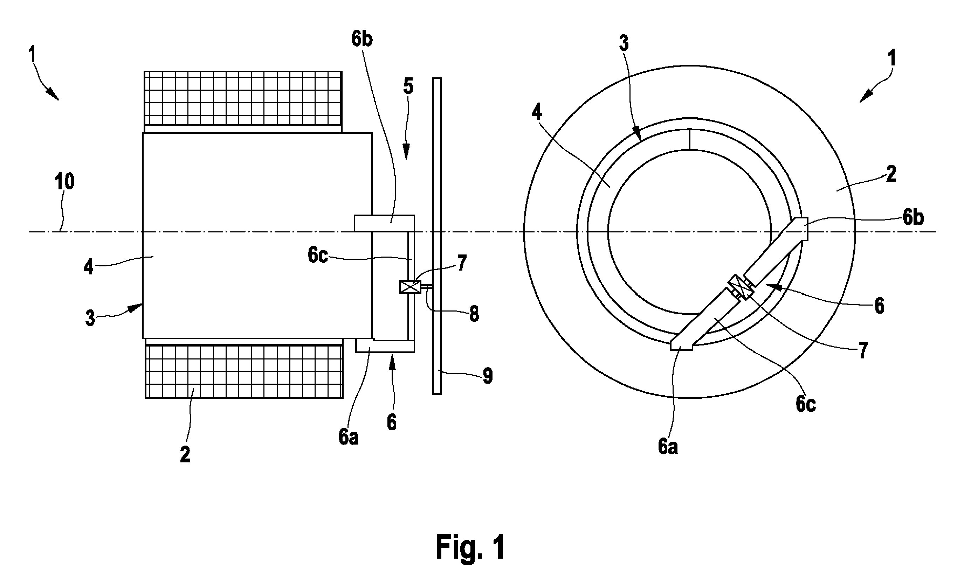

Die in Fig. 1 dargestellte elektrische Maschine 1, bei der es sich insbesondere um einen Innenläufer-Elektromotor handelt, umfasst einen Stator 2 in einem nicht dargestellten Motorgehäuse sowie einen im Stator gelagerten Rotor 3, der um die Rotorachse 10 rotieren kann. Der Rotor 3 weist einen Rotor- bzw. Hauptmagneten 4 auf, der im Ausführungsbeispiel als vierpoliger Permanentmagnet ausgebildet ist, dessen Magnetfeld mit einem vom Stator 2 erzeugten magnetischen Drehfeld in Wechselwirkung steht. Im Rahmen der Erfindung kann der Rotor aber anstelle eines Permanentmagneten auch mit einer bestrombaren Wicklung versehen sein, über die ein Magnetfeld erzeugbar ist.

Zur Detektierung der Rotorlage und/oder der Rotordrehgeschwindigkeit ist eine Sensoreinrichtung 5 vorgesehen, die in der Lage ist, das drehende Magnetfeld des Rotormagneten 4 zu sensieren. Die Sensoreinrichtung 5 umfasst ein vorzugsweise als Hallsensor 7 ausgebildetes Sensorelement, das über Verbindungsbeine 8, die Bestandteil des Hallsensors sind, mit einer Platte 9 verbunden ist, sowie ein Flussleitelement 6, welches die magnetische Flussdichte des Rotorfelds an der Position des Hallsensors 7 verstärkt. Hierzu wird über das Flussleitelement 6 ein Rückschluss zur Führung des Rotorflusses zwischen gegensinnigen Polen des Rotormagneten 4 gebildet. Das Flussleitelement 6 besteht aus einem Material mit hoher magnetischer Leitfähigkeit, insbesondere aus einem weichmagnetischen Material wie z.B. Eisen, diversen anderen magnetisch leitfähigen Metallen bzw. deren Legierungen oder aus einem Soft Magnetic Composite (SMC).

Das gehäusefest angeordnete Flussleitelement 6 weist eine Geometrie auf und ist in der Weise positioniert, dass das magnetische Feld des Rotormagneten so zwischen zwei gegensinnigen Rotorpolen geführt wird, dass das durch das Flussleitelement geleitete Magnetfeld das Sensorelement mit hoher Flussdichte orthogonal durchsetzt. Zugleich kann ein Polaritätswechsel präzise gemessen werden, was zusätzlich zu einer verbesserten Rotorlageerkennung beiträgt.

Der Hallsensor 7 ist dem Rotor 3 axial vorgelagert. Das ortsfest gehaltene Flussleitelement 6 überbrückt die axiale Distanz und damit den Luftspalt zwischen der Stirnseite des Rotormagneten 4 und der Position des Hallsensors 7. Das Flussleitelement 6 ist U-förmig ausgebildet und besitzt zwei parallel zueinander verlaufende Polabschnitte 6a, 6b und einen die beiden Polabschnitte verbindenden Steg 6c, an dem der Hallsensor 7 positioniert ist. Die beiden in Achsrichtung verlaufenden Polabschnitte 6a und 6b des Flussleitelementes sind zu gegensinnigen Polen des vierpoligen Rotormagneten 4 geführt; dementsprechend überspannt das Flussleitelement 6 an der Stirnseite des Rotors ein 90°-Winkelsegment des Rotormagneten 4.

Des Weiteren ist es vorteilhaft, den verbindenden Steg 6c des Flussleitelementes mit einem gegenüber den Polabschnitten 6a und 6b reduzierten Querschnitt auszuführen, was eine Erhöhung der Flussleitdichte im Steg 6c zur Folge hat, so dass auch das Sensorelement 7 mit erhöhter Flussdichte orthogonal durchsetzt wird. Beispielsweise kann der Querschnitt des Steges 6c halb so groß sein wie der Querschnitt der Polabschnitte 6a und 6b, die zweckmäßigerweise beide den gleichen Querschnitt aufweisen.

Der Rotormagnet 4 überragt in Achsrichtung den Stator 2 auf der dem Sensorelement 7 zugewandten Seite. Die Polabschnitte 6a und 6b des gehäusefesten Flussleitelementes 6 erstrecken sich in Achsrichtung nur bis zu dem axial überstehenden Stirnbereich des Rotormagneten 4.

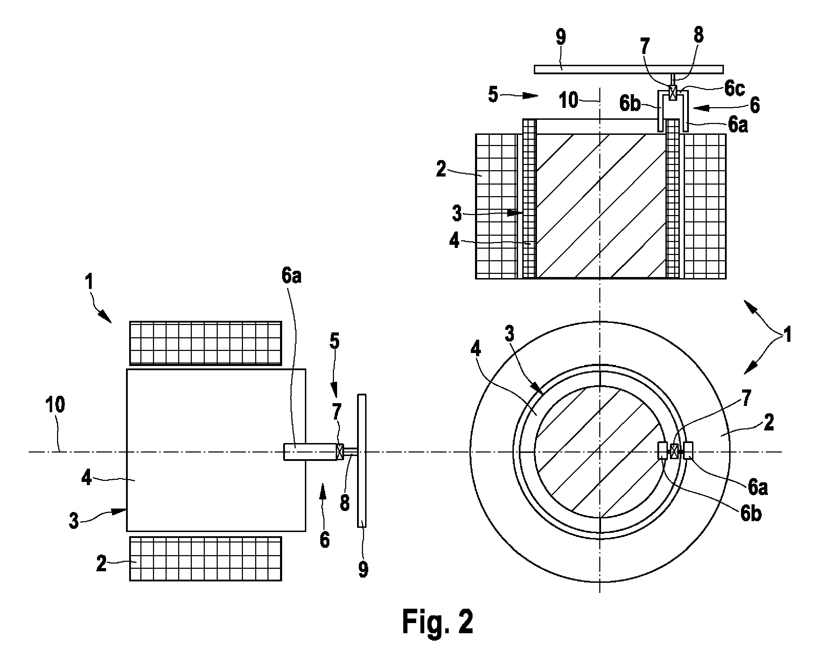

Bei der in Fig. 2 dargestellten elektrischen Maschine handelt es sich wie beim ersten Ausführungsbeispiel um einen Innenläufer-Elektromotor, dessen Rotor 3 jedoch einen Rotormagneten 4 mit radialer Magnetisierung aufweist, bei der die entgegengesetzten Pole des Magneten sich auf der radialen Innen- und Außenseite des Rotormagneten befinden. Um den Rotorrückschluss zur Flussführung durch das Flussleitelement 6 zu nutzen, übergreift das U-förmig ausgebildete Flussleitelement 6 die stirnseitige Wandung des Rotormagneten 4 an der Innen- und Außenseite. Der Rotormagnet 4 überragt den Stator 2 axial, die beiden Polabschnitte 6a und 6b des Flussleitelementes 6 übergreifen die Magnetwandung des Rotormagneten 4 axial im Bereich des Überstandes. Der die beiden Polabschnitte 6a und 6b verbindende Quersteg 6c befindet sich entsprechend auf axialem Abstand zur Stirnseite des Rotors, das Sensorelement 7 liegt unmittelbar benachbart zum Steg 6c. Die Anbindung des als Hallsensor ausgebildeten Sensorelementes 7 erfolgt über die Verbindungsbeine 8 an die Leiterplatte 9. Zwischen dem Sensorelement 7 und dem Rotormagneten 4 befindet sich mit Ausnahme des Flussleitelementes 6 kein weiteres Material, sondern lediglich ein Luftspalt, der eine gegenüber dem Flussleitelement erheblich niedrigere Magnetleitfähigkeit aufweist. Das Flussleitelement ist in der Lage, die magnetisch isolierend wirkende Distanz des Luftspaltes zu überbrücken und den magnetischen Fluss zum Sensorelement zu leiten.

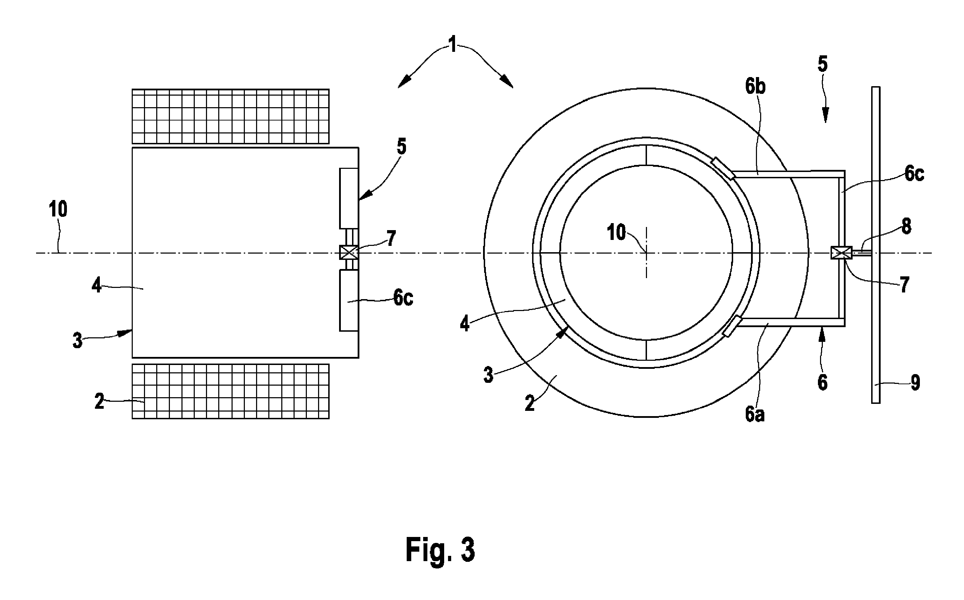

In Fig. 3 ist ein weiteres Ausführungsbeispiel einer elektrischen Maschine 1 dargestellt, bei der das Flussleitelement 6 ebenfalls U-förmig ausgebildet ist und eine Distanz in Querrichtung quer zur Rotorachse 10 überbrückt. Hierfür verlaufen die beiden zueinander parallelen Polabschnitte 6a und 6b quer zur Rotorachse 10 und sind durch die Wandung des Stators 2 geführt. Das Sensorelement 7 befindet sich mit radialem Abstand außerhalb des Stators 2 im Bereich des die beiden Polabschnitte 6a, 6b verbindenden Stegs 6c in einem Abschnitt des Stegs 6c mit verjüngtem Querschnitt. Die Leiterplatte 9, an die das Sensorelement 7 über die Verbindungsbeine 8 angebunden ist, liegt parallel zum verbindenden Steg 6c des Flussleitelementes und befindet sich mit noch größerem seitlichem Abstand zum Stator.

Die Polabschnitte 6a und 6b durchdringen den Stator 2 in Querrichtung vollständig und erstrecken sich bis zur radialen Innenseite des Stators 2. Im Bereich ihrer freien Stirnseite weisen die Polabschnitte 6a, 6b Polschuhe auf, die sich näherungsweise in Umfangsrichtung des zwischen Innenseite des Stators und Außenseite des Rotormagneten 4 befindlichen Luftspaltes erstrecken. Die Polabschnitte 6a, 6b einschließlich ihrer Polschuhe sind in der Weise zueinander beabstandet, dass die Distanz zwischen zwei benachbarten, gegensinnigen Polen des Rotormagneten überbrückt wird.

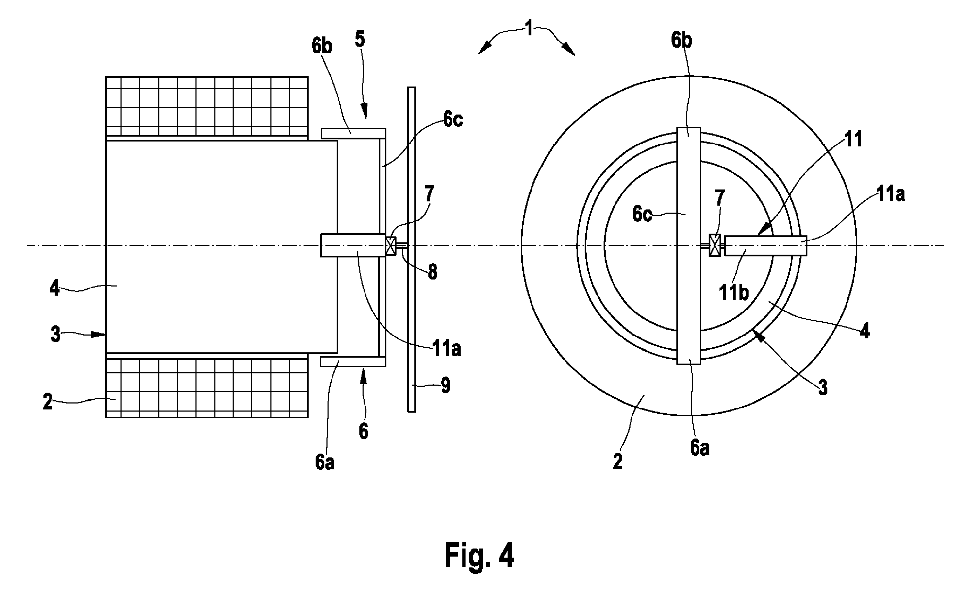

Auch im Ausführungsbeispiel nach Fig. 4 liegt das Sensorelement 7 mit axialem Abstand zur Stirnseite des Rotors 3. Der Rotor 3 überragt den Stator 2 axial, wobei die Polabschnitte des Flussleitelementes 6 den überstehenden Teil des Rotors stirnseitig übergreifen. Im Ausführungsbeispiel nach Fig. 4 besitzt das Flussleitelement 6 zusätzlich zu den Polabschnitten 6a und 6b, die gemeinsam mit dem verbindenden Steg 6c eine U-Form bilden, einen zusätzlichen Flussleitabschnitt 11, bestehend aus einem Polabschnitt 11a und einem Steg 11b. Der Polabschnitt 11a erstreckt sich ebenso wie die Polabschnitte 6a und 6b in Achsrichtung, jedoch ist der winkelförmige Flussleitabschnitt 11 in einem 90°-Winkel zu dem Steg 6c angeordnet, mit dem der Steg 11b des Flussleitabschnittes 11 verbunden ist. Unmittelbar benachbart zur Anbindung des Steges 11b an den Steg 6c ist das Sensorelement 7 positioniert; an dieser Stelle weist der Steg 11b einen reduzierten Querschnitt auf. Die Polabschnitte 6a und 6b sind zum gleichen magnetischen Pol gerichtet, der Polabschnitt 11a des zusätzlichen Flussleitabschnitts 11 ist zum Gegenpol gerichtet, so dass über die Polabschnitte 6a und 6b der magnetische Fluss gesammelt und über den Polabschnitt 11a zum Gegenpol geführt wird.

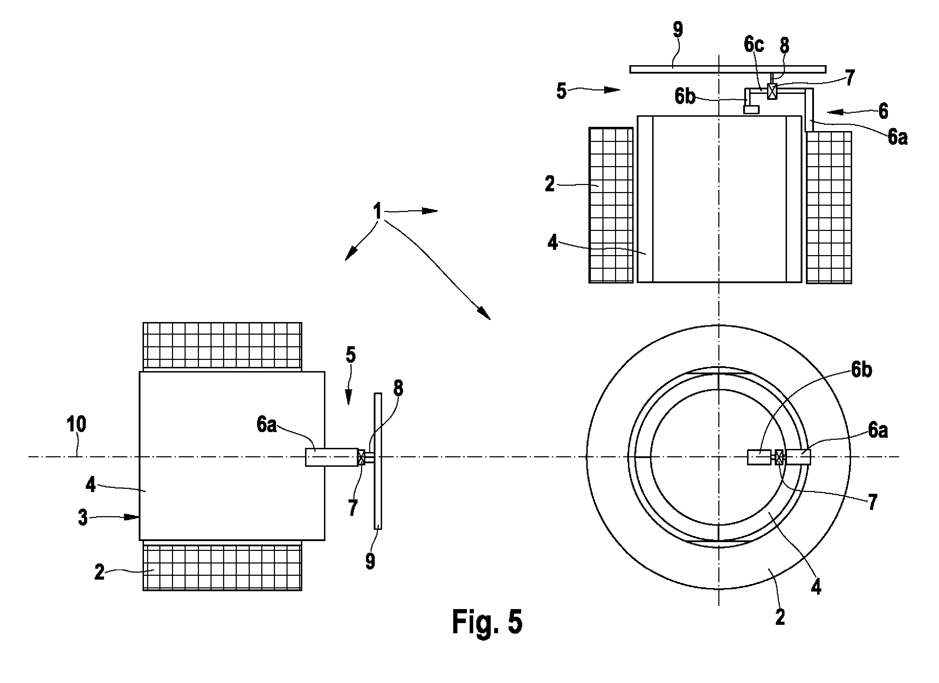

Das in Fig. 5 dargestellte Ausführungsbeispiel weist analog zum Ausführungsbeispiel nach Fig. 2 einen ringförmigen Rotormagneten 4 mit radialer Magnetisierung auf. Das Sensorelement 7 befindet sich mit axialem Abstand zur Rotorstirnseite. Das Flussleitelement übergreift die axial überstehende Wandung des Rotormagneten 4 mit seinem außen liegenden Polabschnitt 6a, der zweite Polabschnitt 6b ist dagegen mit radialem Abstand zur Innenseite der Rotorwandung zum mittleren Bereich des Rotors geführt, wodurch es möglich ist, den Rotorrückschluss zur Flussführung zu nutzen. An der freien Stirnseite des Polabschnittes 6b befindet sich ein quer zur Rotorachse gerichteter Polschuh.

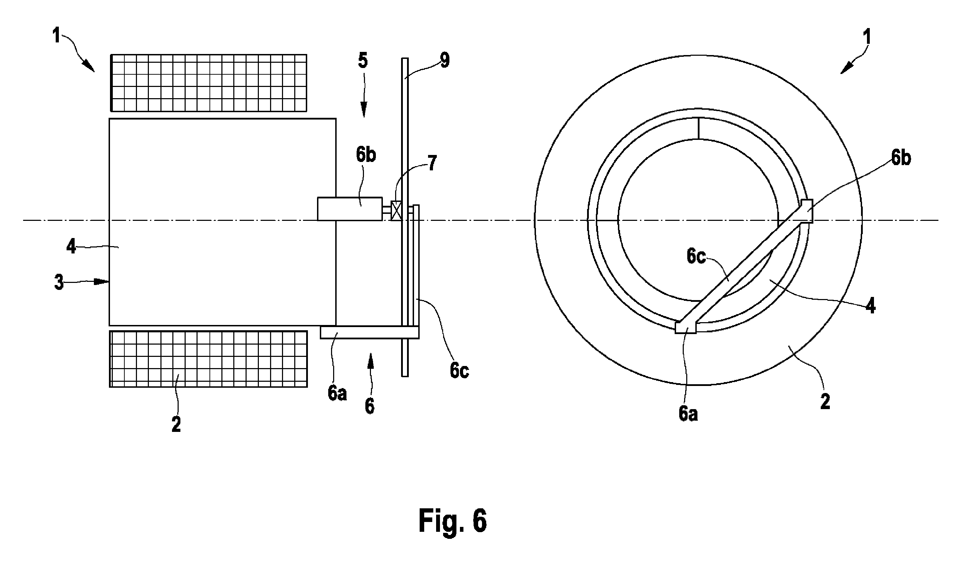

Der prinzipielle Aufbau des Ausführungsbeispieles nach Fig. 6 entspricht demjenigen nach Fig. 1, so dass insoweit auf die dortige Beschreibung verwiesen wird. Unterschiedlich ist jedoch die Position des Sensorelementes 7: gemäß Fig. 6 liegt das Sensorelement 7 nicht am verbindenden Steg 6c, sondern an dem Polabschnitt 6b, der an der Position des Sensorelementes einen reduzierten Querschnitt aufweist. Außerdem handelt es sich bei dem Sensorelement 7 um einen SMD-Hallsensor (Surface Mounted Device), der nicht über Verbindungsbeine, sondern unmittelbar auf der Leiterplatte 9 angeordnet ist. Die Leiterplatte 9 wird in Achsrichtung von den Polabschnitten 6a, 6b sowie dem verbindenden Steg 6c übergriffen, so dass der Steg 6c einen größeren axialen Abstand zum Rotor aufweist als die Leiterplatte 9.

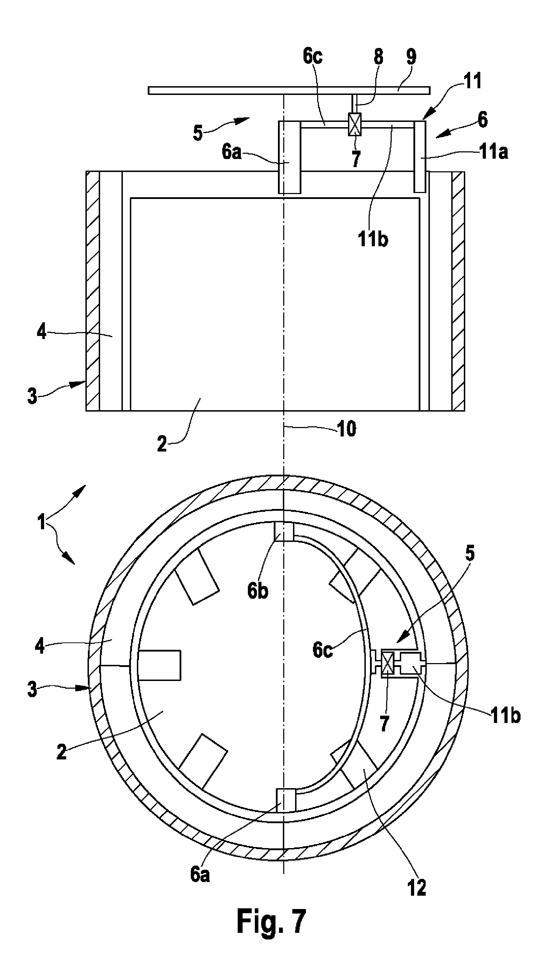

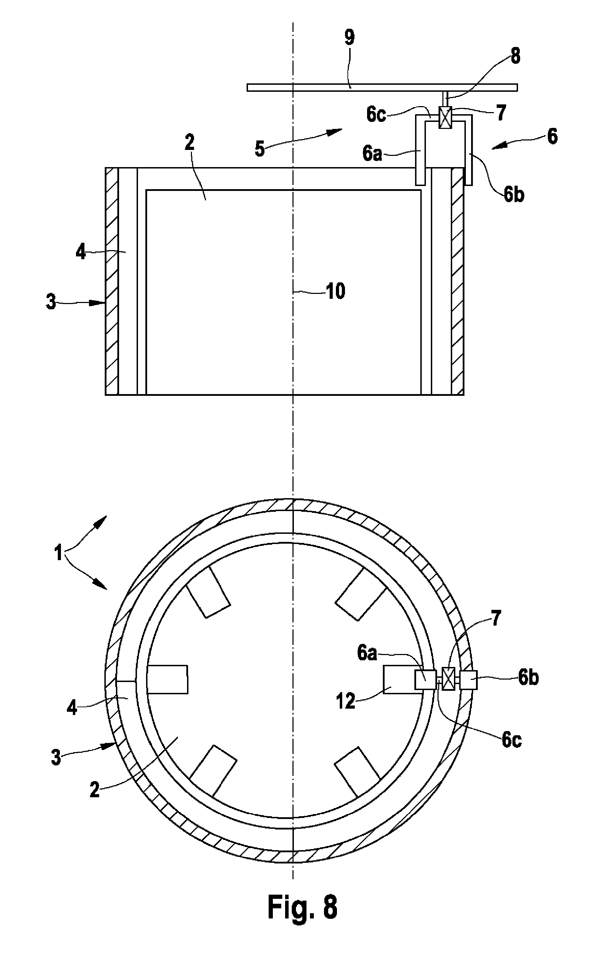

In den Ausführungsbeispielen nach den Figuren 7 und 8 handelt es sich um elektrische Maschinen, die als Außenläufer-Motoren ausgebildet sind, deren außen liegende Rotoren 3 mit ringförmigen Rotormagneten 4 den innen liegenden Stator 2 umgreifen. Die Sensorelemente 7 befinden sich in beiden Ausführungsbeispielen mit axialem Abstand zum Rotor bzw. Stator. Das Flussleitelement 6 ist im Ausführungsbeispiel nach Fig. 7 U-förmig übergreifend mit Polabschnitten 6a und 6b an gegenüberliegenden Seiten des Stators und einem verbindenden Steg 6c ausgebildet, wobei zusätzlich ein weiterer Flussleitabschnitt 11 mit einem Polabschnitt 11a und einem Steg 11b vorgesehen ist und der zusätzliche Flussleitabschnitt 11 sich orthogonal zu den Polabschnitten und dem Steg des Flussleitelements 6 erstreckt. Die Anbindung des Flussleitabschnittes 11 erfolgt über den Steg 11b, der mit dem Steg 6c verbunden ist. Das Sensorelement 7 befindet sich im Steg 11b benachbart zur Anbindung an den Steg 6c in einem reduzierten Abschnitt.

Wie im Ausführungsbeispiel nach Fig. 4 sind auch bei Fig. 7 die Polabschnitte 6a und 6b zum gleichen magnetischen Pol geführt, wohingegen der Polabschnitt 11a des zusätzlichen Flussleitabschnitts 11 zum Gegenpol gerichtet ist. Über die Polabschnitte 6a und 6b wird der magnetische Fluss gesammelt und über den Polabschnitt 11a zum Gegenpol geführt.

In den Stator 2 sind über den Umfang verteilt mehrere Nuten 12 eingebracht, die sich in Radialrichtung erstrecken und von der äußeren Mantelfläche des Stators 2 radial nach innen reichen. In einer dieser Nuten 12 befindet sich der Polabschnitt 11a des zusätzlichen Flussleitabschnittes 11.

Im Ausführungsbeispiel gemäß Fig. 8, das ebenfalls einen Außenläufer-Motor betrifft, weist der Rotormagnet 4 eine radiale Magnetisierung auf, dementsprechend übergreift das U-förmig ausgebildete Flussleitelement 6 die axial überstehende Stirnseite des Rotors 3. Auch in diesem Ausführungsbeispiel sind in den innen liegenden Stator 2 radial verlaufende Nuten 12 eingebracht, in einer dieser Nuten 12 ist der Polabschnitt 6a des Flussleitelementes 6 aufgenommen.

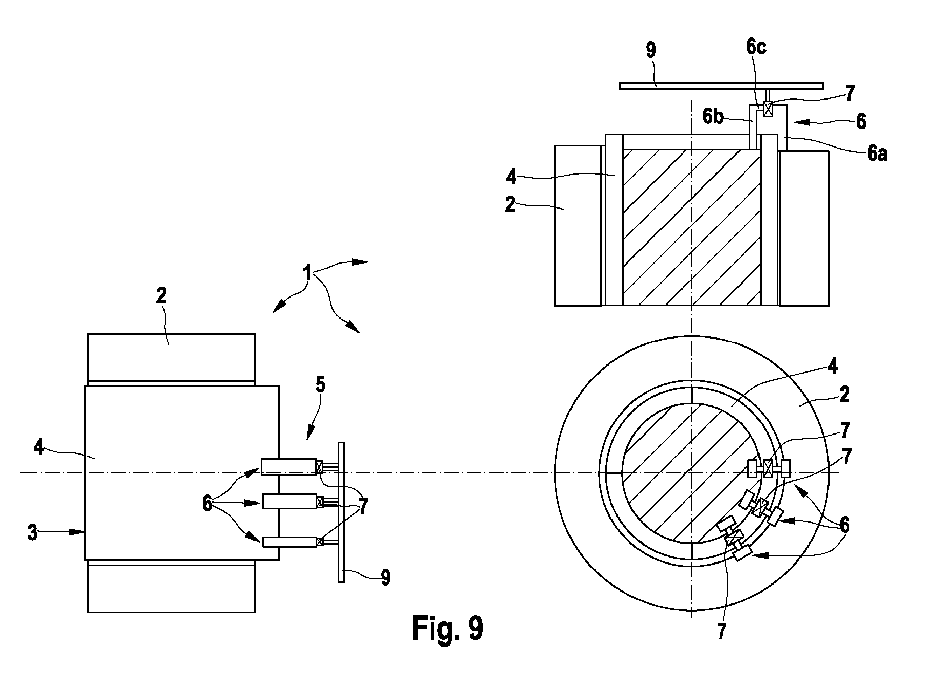

Im Ausführungsbeispiel nach Fig. 9 handelt es sich um einen Innenläufer-Motor. Die Sensoreinrichtung 5 umfasst insgesamt drei Sensorelemente 7, denen jeweils ein Flussleitelement 6 zugeordnet ist. Alle Sensorelemente 7 sind auf einer gemeinsamen Leiterplatte 9 angeordnet. Jedes U-förmig ausgebildete Flussleitelement 6 übergreift die axial überstehende Stirnseite des Rotormagneten 4, die drei Flussleitelemente 6 sind über den Umfang verteilt platziert, sie befinden sich aber innerhalb eines 90°-Winkelsegments.

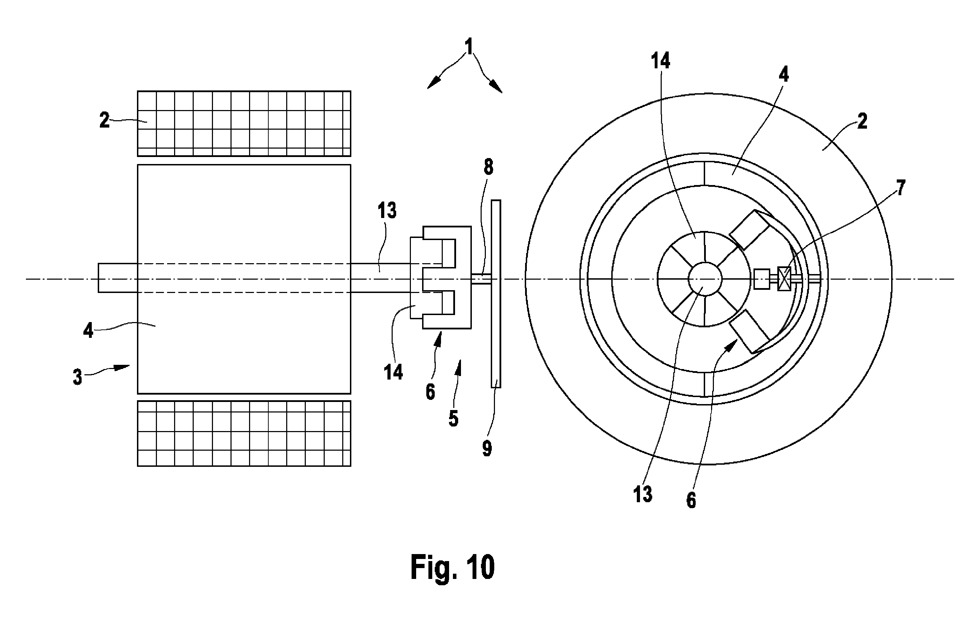

Im Ausführungsbeispiel nach Fig. 10 ist der Sensoreinrichtung 5 ein zusätzlicher Gebermagnet 14 zugeordnet, welcher an einer Welle 13 des Rotors 3 gehalten ist und gemeinsam mit dem Rotor umläuft. Der Gebermagnet 14 befindet sich auf axialem Abstand zum Haupt- bzw. Rotormagneten 4. Das Flussleitelement 5 ist dem Gebermagneten 14 zugeordnet, das Sensorelement 7 detektiert den magnetischen Fluss, der vom Gebermagneten 14 ausgeht.

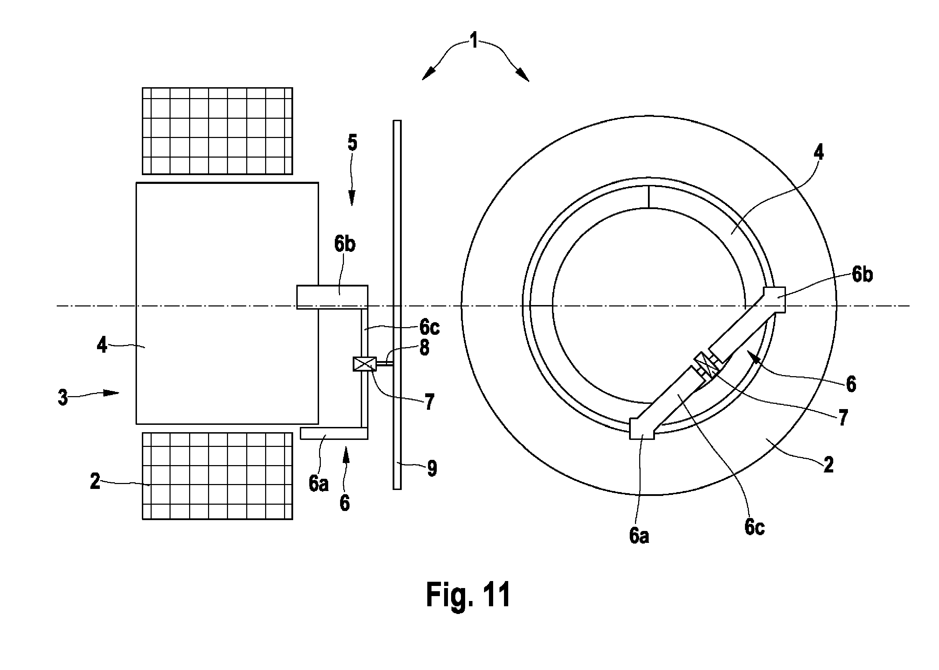

Das Ausführungsbeispiel nach Fig. 11 entspricht im Wesentlichen demjenigen nach Fig. 1, jedoch mit dem Unterschied, dass der Stator in Klauenpolkonstruktion aufgebaut ist, was insbesondere für relativ einfach aufgebaute kleinmotorische Antriebe wie z.B. Zusatzwasserpumpen Anwendung findet. Es existieren keine Wicklungsköpfe, was im Hinblick auf die Ausformung und Anordnung von Flussleitelementen zusätzliche Möglichkeiten bietet. Das Sensorelement 7 liegt auf axialem Abstand zu Rotor und Stator, die Distanz wird mithilfe des Flussleitelementes 6 überbrückt.

## Patentansprüche

1. Elektrische Maschine, insbesondere Elektromotor für ein Hilfsaggregat in einem Kraftfahrzeug, mit einem Stator (2) und einem Rotor (3) und einer Sensoreinrichtung (5) zum Erfassen der Relativlage zwischen Stator (2) und Rotor (3), wobei die Sensoreinrichtung (5) ein Flussleitelement (6) und ein magnetisches Sensorelement (7) umfasst und über das Flussleitelement (6) der Magnetfluss eines mit dem Rotor (3) umlaufenden Magneten zum Sensorelement (7) zu leiten ist, wobei das Flussleitelement (6) zur Ausbildung eines magnetischen Rückschlusses zwei zum Rotor (3) führende Polabschnitte (6a, 6b) sowie einen die Polabschnitte (6a, 6b) verbindenden Steg (6c) aufweist, wobei das Sensorelement (7) benachbart zu dem Steg (6c) positioniert ist,
**dadurch gekennzeichnet, dass** das Sensorelement mit Abstand zum Rotor (3) angeordnet ist, wobei ein sich zwischen dem Sensorelement (7) und dem Rotor (3) befindender Luftspalt von dem Flussleitelement (6) überbrückt wird.

2. Elektrische Maschine nach Anspruch 1,
**dadurch gekennzeichnet, dass** ein dem Sensorelement (7) benachbarter Steg (6c) des Flussleitelements (6) einen gegenüber Polabschnitten (6a, 6b) des Flussleitelements (6), die zum Rotor (3) führen, reduzierten Querschnitt aufweist.

3. Elektrische Maschine nach Anspruch 1 oder 2,
**dadurch gekennzeichnet, dass** das Flussleitelement (6) zumindest annähernd U-förmig ausgebildet ist und die zwei zum Rotor (3) führenden Polabschnitte (6a, 6b) zumindest annähernd parallel zueinander ausgerichtet sind.

4. Elektrische Maschine nach einem der Ansprüche 1 bis 3,
**dadurch gekennzeichnet, dass** das Sensorelement (7) mit Abstand quer zur Rotorachse (10) angeordnet ist, wobei das Flussleitelement (6) zwei quer zur Rotorachse (10) verlaufende Polabschnitte (6a, 6b) zum Überbrücken des Querabstandes aufweist.

5. Elektrische Maschine nach Anspruch 4,
**dadurch gekennzeichnet, dass** die beiden Polabschnitte (6a, 6b) die gleiche axiale Position aufweisen, jedoch quer zur Rotorachse (10) zueinander beabstandet sind.

6. Elektrische Maschine nach Anspruch 4 oder 5,
**dadurch gekennzeichnet, dass** der Steg (6c) zwischen den beiden quer zur Rotorachse (10) verlaufenden Polabschnitten (6a, 6b) in Querrichtung einen größeren Abstand zur Rotorachse (10) aufweist als die äußere Mantelfläche des Stators (2).

7. Elektrische Maschine nach einem der Ansprüche 1 bis 6,
**dadurch gekennzeichnet, dass** der Rotor (3) den Stator (2) axial überragt und das Flussleitelement (6) benachbart zu der den Stator (2) überragenden Stirnseite des Rotors (3) angeordnet ist.

8. Elektrische Maschine nach einem der Ansprüche 1 bis 7,
**dadurch gekennzeichnet, dass** das Sensorelement (7) mit axialem Abstand zum Rotor (3) angeordnet ist, wobei das Flussleitelement (6) zwei axial verlaufende Polabschnitte (6a, 6b) zum Überbrücken der axialen Distanz aufweist.

9. Elektrische Maschine nach einem der Ansprüche 1 bis 8,
**dadurch gekennzeichnet, dass** das Sensorelement (7) an einer Leiterplatte (9) angeordnet ist, die parallel zum Steg (6c) des Flussleitelements (6) liegt.

10. Elektrische Maschine nach Anspruch 9,
**dadurch gekennzeichnet, dass** die Leiterplatte (9) zwischen der Stirnseite des Rotors (3) und dem Steg (6c) angeordnet ist.

11. Elektrische Maschine nach Anspruch 10,
**dadurch gekennzeichnet, dass** der Steg (6c) zwischen der Stirnseite des Rotors (3) und der Leiterplatte (9) liegt.

12. Elektrische Maschine nach einem der Ansprüche 1 bis 11,
**dadurch gekennzeichnet, dass** das Flussleitelement (6) einen dritten, mit dem Steg (6c) verbundenen Polabschnitt (11a) aufweist, der zum Rotor (3) geführt ist.

13. Elektrische Maschine nach einem der Ansprüche 1 bis 12,
**dadurch gekennzeichnet, dass** das Sensorelement ein Hallsensor (7) ist.

14. Elektrische Maschine nach einem der Ansprüche 1 bis 13,
**dadurch gekennzeichnet, dass** das Flussleitelement (6) dem Haupt- bzw. Rotormagneten (4) zugeordnet ist.

15. Elektrische Maschine nach einem der Ansprüche 1 bis 14,
**dadurch gekennzeichnet, dass** ein mit dem Rotor (3) umlaufender Gebermagnet (14) vorgesehen ist, der separat vom und mit Abstand zum Rotormagneten (4) ausgebildet ist und dem das Flussleitelement (6) zugeordnet ist.

16. Elektrische Maschine nach einem der Ansprüche 1 bis 15, **gekennzeichnet durch** eine Ausführung als Innenläufer-Maschine.

17. Elektrische Maschine nach einem der Ansprüche 1 bis 15, **gekennzeichnet durch** eine Ausführung als Außenläufer-Maschine.
